# FASCICULE DE BREVET EUROPEEN

(11) **EP 2 707 258 B1**
(45) Date de publication et mention de la délivrance du brevet: **03.01.2018**
(21) Numéro de dépôt: 12714325.3
(22) Date de dépôt: 17.04.2012
(51) Int. Cl.: B60S 1/52, B60S 1/38

(54) **DISPOSITIF DE PROJECTION DE LIQUIDE POUR BALAI D'ESSUYAGE**
FLÜSSIGSPRÜHVORRICHTUNG FÜR EIN WISCHBLATT
LIQUID SPRAYING DEVICE FOR A WIPER BLADE

(30) Priorité: 13.05.2011 FR 1154184
(43) Date de publication de la demande: 19.03.2014
(73) Titulaire: Valeo Systèmes d'Essuyage, 78322 Le Mesnil Saint Denis (FR)
(72) Inventeur: BOUSSET, Xavier, F-63115 Mezel (FR); KOLANOWSKI, Grégory, F-43300 Siaugues-Saint-Romain (FR); CAILLOT, Gérald, F-78720 Cernay La Ville (FR)
(74) Mandataire: Callu Danseux, Violaine
(86) Numéro de dépôt international: PCT/EP2012/056972
(87) Numéro de publication internationale: WO 2012/156164

(56) Documents cités:
- EP-A1- 1 918 167
- WO-A1-2012/136551
- WO-A2-2011/061461
- DE-A1-102009 017 990
- FR-A1- 2 916 716
- FR-A1- 2 933 933
- US-A- 4 517 704

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "balai plat"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace. Ces deux pièces sont reliées l'une à l'autre par un axe transversal qui autorise leur rotation relative, dans un plan perpendiculaire au pare-brise passant par le bras.

Les essuie-glaces sont également équipés de dispositifs d'amenée d'un liquide lave-vitre qui est acheminé depuis un réservoir installé sur le véhicule et qui est pulvérisé en direction du pare-brise par des buses situées soit autour du pare-brise, soit sur l'essuie-glace lui-même comme c'est le cas du dispositif divulgué dans le document WO2008/148614A1.

Le dispositif de projection divulgué dans ce document est porté par un embout, qui est lui-même fixé sur une monture d'un balai. Cependant, la manière de disposer le dispositif de projection n'est pas détaillée, aucune solution industrialisable et répondant aux exigences économiques du milieu automobile n'étant montrée dans ce document.

Le but de la présente invention est donc de résoudre l'inconvénient décrit ci-dessus principalement en proposant une solution technique pour pulvériser un liquide sur une vitre d'un véhicule automobile qui soit réalisable d'un point de vue industriel. Autrement dit, la solution couverte par l'invention est, d'une part fiable et d'autre part, aboutie d'un point de vue économique, ce qui l'a rend adaptée à une exploitation dans le milieu automobile. De même, la conformation du dispositif de projection selon l'invention rend son montage sur un balai d'essuyage compatible avec les exigences des constructeurs automobiles. Enfin, un tel dispositif de pulvérisation peut aisément être installé en seconde monte puisqu'il ne demande aucune adaptation de la longueur d'un composant du balai d'essuyage. EP-A-1918167 montre le préambule de la revendication 1. L'invention a donc pour objet un dispositif de projection d'un liquide destiné à être monté à un embout apte à être rapporté sur une extrémité longitudinale d'un balai d'essuyage, comprenant un corps et un canal de circulation du liquide réalisés de manière unitaire, ledit canal comprenant un orifice d'entrée et un orifice de projection, dispositif de projection dans lequel le corps comprend une paroi interne qui délimite un logement destiné à recevoir l'embout. On comprend ici que le logement est destiné à s'insérer sur l'embout et à le recouvrir.

Selon un aspect de l'invention, le logement comprend trois ouvertures qui s'étendent respectivement dans un premier côté bordant le corps, dans un deuxième côté bordant le corps et distinct du premier côté, et dans un troisième côté reliant le premier côté au deuxième côté de sorte que le logement est apte à s'insérer sur l'embout. Le premier côté est, notamment, opposé au deuxième côté par rapport au logement. Le logement traverse ainsi de part en part le corps du dispositif de projection.

Selon un autre aspect de l'invention, le corps comprend une première portion reliée à une deuxième portion reliée à son tour à une troisième portion, lesdites portions dudit corps s'étendant dans des plans différents et étant aptes à épouser le contour d'une paroi externe de l'embout. On comprend ici que les trois portions du corps sont aptes à englober en partie l'embout, c'est-à-dire qu'elles sont destinées à recouvrir l'embout. Le logement est ainsi délimité par ses trois ouvertures et les trois portions du corps.

Selon un exemple de réalisation, la paroi interne du corps comprend une première face de forme concave liée à une deuxième face de forme convexe, liée elle-même à une troisième face de forme concave, liée à son tour à une quatrième face de forme convexe, liée enfin à une cinquième face de forme concave, lesdites faces étant aptes à épouser le contour d'une paroi externe de l'embout. De la même manière qu'exposée dans le paragraphe précédent, on comprend ici que les faces de la paroi interne sont aptes à englober en partie l'embout, c'est-à-dire qu'elles sont destinées à recouvrir l'embout sur au moins une partie de sa longueur. Le logement est ainsi délimité dans ce cas par ses trois ouvertures et les cinq faces de la paroi interne.

Le dispositif de projection s'étend selon une première direction qualifiée de « longitudinale » en ce sens qu'elle s'étend parallèlement à la direction longitudinale du balai. De même, le canal s'étend selon une deuxième direction longitudinale, cette dernière étant parallèle à la première direction longitudinale. On garantit ainsi un arrosage d'une zone de la vitre la plus proche possible de la lame d'essuyage.

Selon l'invention, le dispositif de projection s'étend selon la première direction longitudinale et comprend au moins un moyen de fixation apte à bloquer le dispositif de projection par rapport à l'embout, selon une direction parallèle à la première direction longitudinale. Avantageusement, le moyen de fixation comprend au moins un ergot.

Selon une variante de l'invention, au moins un des ergots, dit premier ergot, prend naissance au niveau de la première face concave de la paroi interne du corps et au moins un des ergots, dit deuxième ergot, prend naissance au niveau de la cinquième face concave de la paroi interne du corps.

De manière avantageuse, le ou les ergots s'étendent vers l'intérieur du logement. Autrement dit, le ou les ergots s'étendent vers un volume intérieur délimité par le corps du dispositif de projection.

Selon un exemple de réalisation, l'orifice de projection prend la forme d'un trou pratiqué dans une surface issue de moulage avec le canal de circulation. On comprend ici que le canal est bouché à son extrémité porteuse de l'orifice de projection par le même matériau, issu d'un moulage commun avec celui permettant de réaliser le canal.

De manière alternative, l'orifice de projection est réalisé par une bille percée et rapportée à une extrémité ouverte du canal. Une telle bille est maintenue dans le canal mais présente un degré de liberté en rotation par rapport à ce canal.

Selon un aspect de l'invention, le canal de circulation de liquide est relié au corps par au moins un bras qui prend naissance sur une paroi externe du corps.

L'invention concerne aussi un ensemble comprenant un embout apte à être installé à une extrémité longitudinale d'un balai d'essuyage et un dispositif de projection d'un liquide, tel que défini précédemment, pour un balai d'essuyage.

Selon un aspect de l'invention, l'embout peut comprendre une paroi externe en partie en contact avec la paroi interne du dispositif de projection. Le maintien mécanique du dispositif de projection sur l'embout est ainsi assuré grâce au contact d'une partie de la paroi externe de l'embout avec la paroi interne du dispositif de projection.

Dans cet ensemble, l'embout s'étend selon une troisième direction longitudinale, la forme de l'embout au niveau d'une coupe dans un plan transversal à la troisième direction longitudinale, effectuée au droit du dispositif de projection, étant complémentaire à la forme du logement au niveau d'une coupe dans un plan transversal à la troisième direction longitudinale. La troisième direction longitudinale est, notamment, parallèle à la première direction longitudinale et à la deuxième direction longitudinale.

Selon un exemple de réalisation de l'invention, l'embout comprend une première ouverture s'étendant dans un plan transversal à la troisième direction longitudinale et apte à recevoir le balai d'essuyage, le dispositif de projection se situant du côté de ladite première ouverture de l'embout. La première ouverture de l'embout s'étend, par exemple, dans un plan perpendiculaire à la troisième direction longitudinale.

Dans cet ensemble, l'embout comprend au moins une encoche, recevant le moyen de fixation du dispositif.

Avantageusement, l'embout comprend une deuxième ouverture destinée à s'insérer au moins en partie sur le balai d'essuyage et s'étendant dans un plan transversal à la première ouverture de l'embout, ladite deuxième ouverture étant bordée d'un premier flanc et d'un deuxième flanc, au moins une des encoches, dite première encoche, se situe au niveau du premier flanc et au moins une des encoches, dite deuxième encoche, se situe au niveau du deuxième flanc. De cette manière une fois l'ensemble assemblé, la première encoche reçoit le premier ergot et la deuxième encoche reçoit le deuxième ergot.

L'invention concerne également un balai d'essuyage comprenant au moins un support, une vertèbre, une lame d'essuyage, un embout monté sur une extrémité longitudinale du balai et un dispositif de projection tel que décrit précédemment et installé sur ledit embout.

Ainsi, grâce à l'invention, il est possible de positionner de manière simple et fiable, un dispositif de projection sur un embout d'extrémité du balai d'essuyage. En effet, le dispositif de projection est enfilé sur l'embout en profitant du profil complémentaire de la paroi interne du dispositif de projection et de la paroi externe de l'embout. Le dispositif de projection peut être enfilé dans une direction parallèle et/ou perpendiculaire à la première direction longitudinale, le corps du dispositif tendant à s'ouvrir pour laisser passer l'embout puis à se fermer au moment où le moyen de fixation se trouve placé dans la ou les encoches de l'embout. Il s'agit ici d'une solution technique simple à mettre en oeuvre, fiable et répondant aux contraintes économiques existantes dans le milieu automobile.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'une extrémité d'un balai d'essuyage équipé d'un exemple de réalisation d'un dispositif de projection selon l'invention ;
- la figure 2 est une vue en éclaté de la figure 1, représentant une variante de réalisation du dispositif de projection ;
- la figure 3 est une vue en perspective du dispositif de projection selon une variante de réalisation ;
- La figure 4 représente le dispositif de projection illustré à la figure 1, vu de dessous.

Il faut noter que les figures exposent l'invention de manière détaillée pour mettre en oeuvre l'invention, lesdites figures pouvant bien entendu servir à mieux définir l'invention le cas échéant.

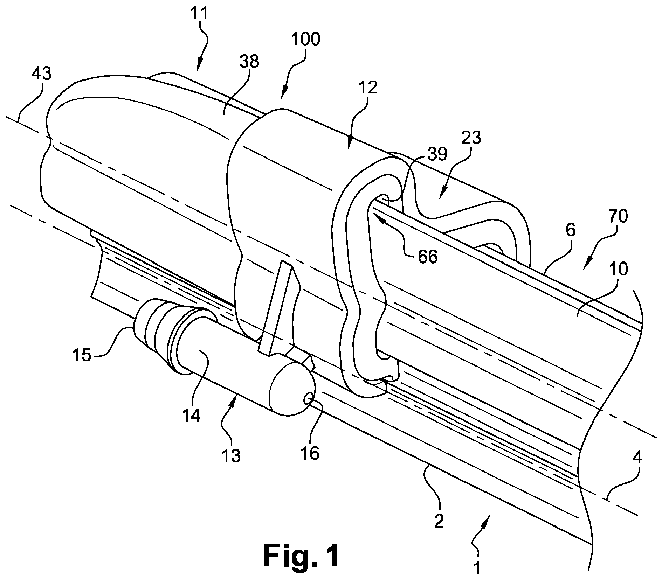

La figure 1 montre de manière partielle un balai d'essuyage 70 équipant un système d'essuyage monté sur un véhicule automobile. Ce balai 70 est installé sur le pare-brise avant du véhicule mais il peut également être monté sur la vitre arrière de ce dernier.

Le balai 70 comprend une lame d'essuyage 1, autrement appelée lame racleuse, constituée d'une zone de frottement 2 sur le vitrage reliée à un talon par une portion amincie. Ce talon assure la liaison mécanique avec un support constitutif du balai. Cette lame d'essuyage 1 s'étend sur la longueur selon un axe longitudinal 4.

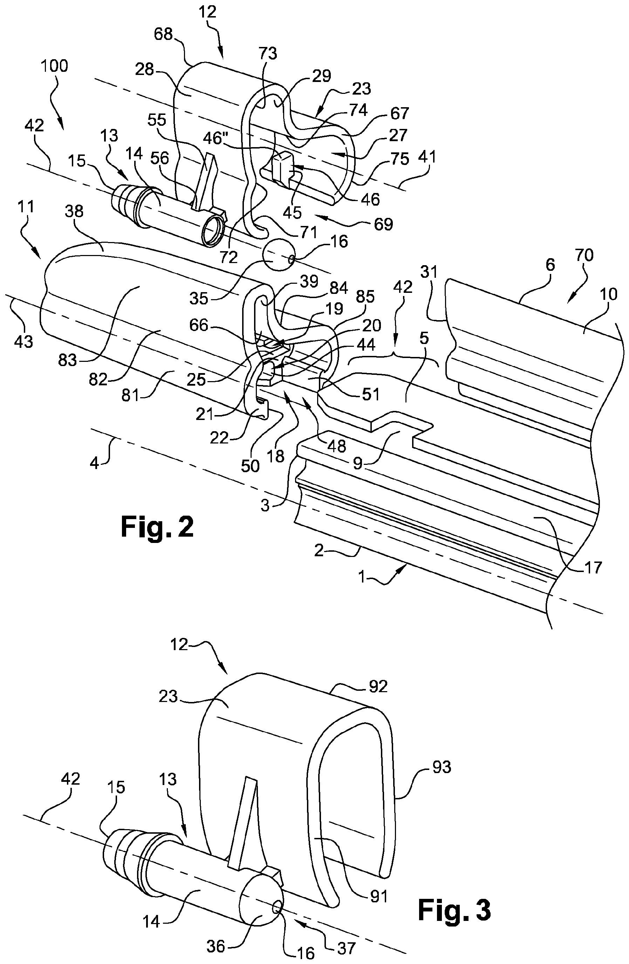

Le balai 70 comprend par ailleurs une vertèbre (visible sur la figure 2) qui forme un dispositif de rigidification du balai 70. A titre d'exemple, il s'agit d'une baguette métallique unique qui s'étend selon l'axe longitudinal 4, définissant ainsi sa longueur, et qui présente au repos une courbure convexe par rapport au pare-brise. Cette baguette présente une flexibilité déterminée, qui en se déformant quand le balai est appliqué sur le pare-brise, provoque un effort réparti sur tout le long de la lame d'essuyage 1.

La lame 1 et la vertèbre sont retenues par le support 6 qui forme alors une monture de support longitudinale couvrant et retenant la vertèbre et la lame d'essuyage 1. Ce support 6 assure ainsi un lien mécanique entre la lame 1 et la vertèbre. Il comprend par ailleurs un déflecteur d'air 10 dont la fonction est d'augmenter la force d'appui du balai d'essuyage 70 sur le pare-brise au bénéfice de l'effet aérodynamique de l'air. Dans cet exemple de réalisation, le déflecteur d'air 10 et le support 6 forment un ensemble commun. Ils sont par exemple moulés à partir d'un même matériau flexible tel qu'un caoutchouc ou un élastomère.

A l'extrémité du balai est installé un embout 11. D'une manière générale, cet embout 11 assure une multiplicité de fonctions :
- il participe au maintien mécanique du balai d'essuyage 70 ;
- il autorise le montage et le démontage de la lame d'essuyage 1 par rapport au support 6, cette dernière pouvant être remplacée par translation de la lame vis-à-vis du support 6 ;
- il assure une finition esthétique de l'extrémité du balai d'essuyage ;
- il sert de support pour recevoir le dispositif de projection 12.

L'embout 11 présente une section globalement complémentaire à la section du support 6 et du déflecteur 10. Cet embout comprend une paroi interne 39 et une paroi externe 38 qui suit le profil du support 6 et du déflecteur 10.

La figure 1 montre aussi un exemple de réalisation du dispositif de projection 12 d'un liquide lave vitre selon l'invention. Un tel dispositif est destiné à être monté sur l'embout 11 et apporte une quantité de liquide sur la surface vitrée de sorte à favoriser le nettoyage de cette dernière par l'action de raclage du balai d'essuyage.

Un tel dispositif de projection 12 comprend au moins un corps 23 et un canal 13 de circulation du liquide réalisés de manière unitaire. On comprend ici que ce canal 13 et ce corps 23 sont moulés simultanément à partir d'une matière plastique. Ils forment ainsi un ensemble inséparable sans destruction de l'un ou de l'autre des ces éléments.

Le canal 13 prend la forme d'un tube 14 creux et cylindrique qui comporte, à une première extrémité longitudinale un orifice d'admission 15 du liquide, et à une deuxième extrémité opposée à la première extrémité par rapport au tube 14, un orifice de projection 16.

La figure 2 montre plus en détails la structure des éléments constitutifs du balai d'essuyage selon l'invention.

La lame d'essuyage 1 comporte sa zone de frottement 2 et son talon 3 délimité par une paroi supérieure 17. La vertèbre est ici référencée 5 et on constate que cette dernière comprend une découpe 9 réalisée sur un côté de la vertèbre. Une telle découpe participe à la solidarisation de l'embout 11 sur le balai d'essuyage.

L'embout 11 est apte à être rapporté sur une extrémité longitudinale du balai d'essuyage 70 et présente une dimension d'extension longitudinale parallèle à l'axe longitudinal 4, c'est-à-dire qu'il s'étend selon une direction longitudinale, appelée troisième direction longitudinale 43 parallèle à la direction définie par l'axe longitudinal 4. L'embout 11 est délimité vis-à-vis de l'extérieur par la paroi externe 38. Il comprend en outre la paroi interne 39, opposée à la paroi externe 38 et qui délimite au moins partiellement un volume ou espace dans lequel s'étendent une première cavité 19 et une deuxième cavité 20.

La première cavité 19 est apte à recevoir la vertèbre 5 alors que la deuxième cavité 20 est apte à recevoir la lame d'essuyage 1, plus spécifiquement le talon 3 de la lame.

La première cavité 19 est formée dans le matériau plastique constitutif de l'embout 11. Cette première cavité 19 correspond à un enlèvement de matière de section complémentaire à la section de la vertèbre 5. Une telle première cavité 19 s'étend selon une direction parallèle à la troisième direction longitudinale 43. Cette première cavité 19 est ainsi délimitée d'un côté par une face supérieure constitutive de l'embout 11 et de l'autre par une paroi intermédiaire 25. Latéralement, cette première cavité 19 est bordée par deux portions de la paroi interne 39 de l'embout 11.

La deuxième cavité 20 reçoit le talon 3 de la lame d'essuyage 1. Cette deuxième cavité 20 s'étend longitudinalement dans l'embout 11 selon une direction parallèle à la troisième direction longitudinale 43. Une telle deuxième cavité 20 est à l'opposé de la première cavité 19 par rapport à la paroi intermédiaire 25. On comprend que celle-ci délimite à la fois la première cavité 19 et la deuxième cavité 20. L'embout 11 comprend encore une saignée alignée avec la deuxième cavité 20 et qui ouvre cette dernière vers le milieu environnant l'embout 11. Une telle saignée est de largeur inférieure à la largeur de la deuxième cavité 20 mesurée selon un axe transversal perpendiculaire à l'axe longitudinal 4 et autorise le passage de la portion amincie située entre le talon 3 et la zone de frottement 2.

La cavité 20 est bordée latéralement par deux bords latéraux dit premier bord latéral 44 et deuxième bord latéral (non représenté). Le premier bord latéral 44 est relié à la paroi interne 39 et externe 38 de l'embout 11 par l'intermédiaire d'un premier flanc 50 et de la même manière, le deuxième bord latéral est relié à la paroi interne 39 et externe 38 de l'embout 11 par l'intermédiaire d'un deuxième flanc 51. Le premier flanc 50 et le deuxième flanc 51 s'étendent, par exemple, selon deux plans parallèles entre eux et parallèlement à la troisième direction longitudinale 43. Entre le premier flanc 50 et le deuxième flanc 51 s'étend ainsi la cavité 20.

On notera que l'embout 11 comprend une face 21 dans laquelle débouchent la première cavité 19 et la deuxième cavité 20. Cette face 21 s'étend dans un plan perpendiculaire à l'axe longitudinal 4 et cette face 21 est ménagée en retrait d'un bord 22 qui termine l'embout 11. Cette face 21 est parallèle à une première ouverture 66 de l'embout 11 par laquelle est enfilé le balai d'essuyage 70. Cette première ouverture 66 de l'embout 11 s'étend, par exemple, dans un plan transversal à la troisième direction longitudinale et notamment dans un plan perpendiculaire à la troisième direction longitudinale.

Ainsi, la paroi externe 38, la paroi interne 39, le premier flanc 50 et le deuxième flanc 51 se prolongent au delà de la face 21 pour former un espace interne 18. Un tel espace interne 18 reçoit alors le support 6 et avantageusement le déflecteur d'air 10 du balai d'essuyage. Autrement dit, la paroi interne 39 chevauche le support 6, ce qui permet de cacher les éventuelles bavures disgracieuses qu'une coupe du support 6 entraîne. La face 21 et une tranche extrémale 31 du support 6 forment deux butées qui viennent en appui l'une contre l'autre quand l'embout 11 est enfilé sur le support 6.

On appelle deuxième ouverture 48 de l'embout 11, l'ouverture présente entre le premier flanc 50 et le deuxième flanc 51. Cette deuxième ouverture 48 de l'embout 11 est ainsi bordée par le premier flanc 50 et le deuxième flanc 51 et est destinée à s'insérer au moins en partie sur le balai d'essuyage. Elle s'étend dans un plan transversal, notamment perpendiculaire, au plan dans lequel s'étend la première ouverture 66 de l'embout 11.

La figure 2 montre également en détails la structure du dispositif de projection d'un liquide selon l'invention. Un tel dispositif de projection s'étend selon une direction longitudinale parallèle à l'axe longitudinal 4 et appelée première direction longitudinale 41.

Le corps 23 du dispositif de projection 12 comprend selon l'invention, une paroi interne 29 qui délimite un logement 27 destiné à recevoir ou à couvrir l'embout 11. Le corps 23 comprend en outre une paroi externe 28 qui le délimite vis-à-vis de l'extérieur.

Le logement 27 comprend trois ouvertures qui s'étendent respectivement dans un premier côté 67 bordant le corps 23, dans un deuxième côté 68 bordant le corps 23 et distinct du premier côté 67, et dans un troisième côté 69 reliant le premier côté 67 au deuxième côté 68 de sorte que le logement 27 soit apte à s'insérer sur l'embout 11. Le premier côté 67 bordant le corps 23 s'étend dans un plan transversal à la première direction longitudinale 41 et notamment dans un plan perpendiculaire à la première direction longitudinale 41. Le deuxième côté 68 bordant le corps 23 s'étend également dans un plan transversal à la première direction longitudinale 41 et par exemple dans un plan perpendiculaire à la première direction longitudinale 41 de sorte qu'il est opposé au premier côté 67 bordant le corps 23 par rapport au logement 27. Le troisième côté 69 s'étend dans un plan transversal aux plans dans lesquels s'étendent les premier et deuxième côtés 67, 68, bordant le corps 23 et en particulier dans un plan perpendiculaire aux plans dans lesquels s'étendent les premier et deuxième côtés 67, 68, bordant le corps 23.

On appelle première ouverture du logement 27, l'ouverture s'étendant dans le plan dans lequel s'étend le premier côté 67 bordant le corps 23 et située du côté du centre du balai d'essuyage 70. On appelle deuxième ouverture du logement 27, l'ouverture s'étendant dans le plan dans lequel s'étend le deuxième côté 68 bordant le corps 23 et située du côté de l'extrémité du balai d'essuyage 70. On appelle troisième ouverture du logement 27, l'ouverture s'étendant dans le plan dans lequel s'étend le troisième côté 69 reliant le premier côté au deuxième côté.

Ainsi, le logement 27 forme un trou qui traverse de part en part le dispositif de projection 12, suivant la première direction longitudinale 41 pour que le dispositif de projection 12 puisse s'insérer sur l'embout 11. Un tel logement garantit donc la retenue mécanique du dispositif de projection 12 vis-à-vis de l'embout 11.

La paroi interne 29 du corps 23 du dispositif de projection 12 comprend, en la regardant de l'intérieur et comme illustré à la figure 2, une première face 71 de forme concave liée à une deuxième face 72 de forme convexe, liée elle-même à une troisième face 73 de forme concave, liée à son tour à une quatrième face 74 de forme convexe, liée enfin à une cinquième face 75 de forme concave. Les faces 71, 72, 73, 74, 75 sont ainsi aptes à épouser le contour de la paroi externe 38 de l'embout 11, c'est-à-dire que les faces de la paroi interne 29 du dispositif de projection 12 sont destinées à recouvrir la paroi externe 38 de l'embout 11 afin d'assurer le maintien mécanique du dispositif de projection 12 sur l'embout 11.

A cet effet, la paroi externe 38 de l'embout 11 comprend notamment une première face 81 de forme convexe reliée à une deuxième face 82 de forme concave, reliée elle-même à une troisième face 83 de forme convexe, reliée à son tour à une quatrième face 84 de forme concave, reliée enfin à une cinquième face 85 de forme convexe. Les première, deuxième, troisième, quatrième et cinquième faces de la paroi externe 38 de l'embout 11 peuvent ainsi recevoir et être en contact avec respectivement les première, deuxième, troisième, quatrième, et cinquième faces de la paroi interne 29 du dispositif de projection 12.

Comme représenté sur la figure 2, le dispositif de projection selon l'invention peut comprendre au moins un moyen de fixation 45 apte à bloquer le dispositif de projection par rapport à l'embout 11, selon une direction parallèle à la première direction longitudinale 41. De cette manière, le dispositif de projection 12 est bloqué sur l'embout 11 grâce à sa paroi interne 29 et à son moyen de fixation 45 dans toutes les directions de l'espace.

Le moyen de fixation comprend, par exemple, au moins un ergot 46 et notamment, deux ergots 46. Le ou les ergots 46 prennent la forme d'excroissances qui naissent au niveau de la paroi interne 29 du corps 23 du dispositif de projection 12. Le ou les ergots 46 s'étendent notamment vers l'intérieur du logement 27, c'est-à-dire vers un volume intérieur du corps 23, délimité par la paroi interne 29 du corps 23.

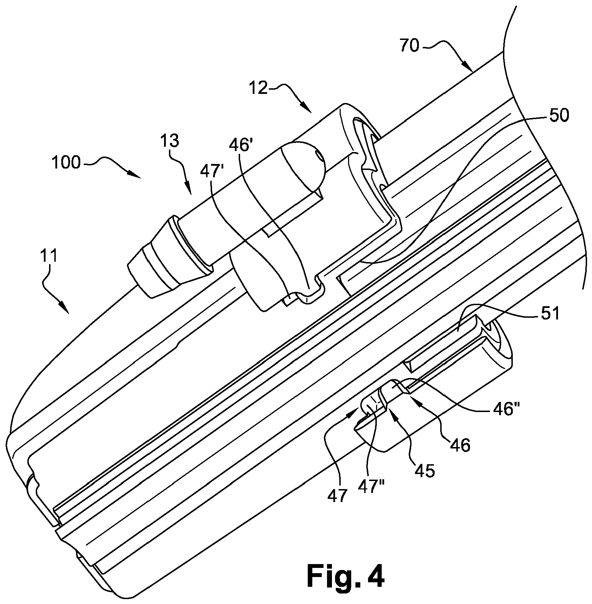

Dans un exemple de réalisation, au moins un des ergots, dit premier ergot (référencé 46' sur la figure 4) prend naissance au niveau de la première face 71 concave de la paroi interne 29 du corps 23 et au moins un des ergots, dit deuxième ergot 46", prend naissance au niveau de la cinquième face 75 concave de la paroi interne 29 du corps 23.

La figure 2 montre aussi un exemple de réalisation de l'orifice de projection 16. Le tube 14 est alors ouvert pour recevoir une bille 35 percée d'un trou en son centre. Cette dernière est ainsi rapportée à une extrémité ouverte du canal 13, en particulier dans le tube 14, de manière mobile en rotation et fixe en translation pour pouvoir ajuster la projection du liquide au souhait de l'utilisateur du véhicule.

Le canal 13 s'étend également selon une direction longitudinale parallèle à l'axe longitudinal 4, dite deuxième direction longitudinale 42. Dans cet exemple de réalisation de l'invention, la deuxième direction longitudinale 42 est parallèle à la première direction longitudinale 41. Une telle disposition favorise l'efficacité du nettoyage de la vitre essuyée car cela permet au liquide lave vitre d'être projeté au plus prés de la lame d'essuyage.

Le canal 13 de circulation de liquide, le corps 23, le ou les ergots 46 forment une pièce unitaire, c'est-à-dire réalisée simultanément et à partir d'un même matériau, par exemple un plastique.

Le canal 13 de circulation de liquide est ainsi relié mécaniquement au corps 23 via au moins un bras 55, autrement appelé jambe de force. Ce bras 55 prend naissance d'un côté sur la paroi externe 28 du corps 23 du dispositif de projection 12 et de l'autre sur le tube 14. De manière complémentaire, une telle liaison est complétée par un prolongement 56 de la paroi externe 28 du corps 23 du dispositif de projection 12 en direction du tube 14. Dans une telle situation, le bras 55 s'étend dans un plan perpendiculaire au prolongement 56.

La figure 3 représente une variante de réalisation de l'invention selon laquelle le corps 23 du dispositif de projection 12 comprend une première portion 91 reliée à une deuxième portion 92 reliée à son tour à une troisième portion 93. Les première, deuxième et troisième portions du corps 23 s'étendent en particulier dans des plans différents, la première portion 91 étant notamment opposée à la troisième portion 93 et la deuxième portion 92 étant par exemple opposé à la troisième ouverture du logement 27.

Ainsi, dans le cas où l'embout présenterait une paroi externe de forme différente de celle illustrée à la figure 2, par exemple, une paroi externe présentant trois portions s'étendant dans des plans différents, le dispositif de projection selon la variante de réalisation représentée à la figure 3 serait apte à s'insérer sur l'embout. Autrement dit, la première portion 91, la deuxième portion 92 et la troisième portion 93 sont aptes à épouser le contour de la paroi externe 38 de l'embout 11.

La figure 3 permet en outre de représenter un autre exemple de réalisation de l'orifice de projection 16. Le tube 14 est fermé à sa deuxième extrémité par une surface 36, par exemple sphérique, issue de moulage simultanément à la formation du canal 13 de circulation de liquide. Cette surface sphérique 36 présente un trou 37 qui s'étend selon un axe central confondu avec la deuxième direction longitudinale 42, ce trou 37 assurant la pulvérisation du liquide sur la vitre à essuyer. L'orifice de projection 16 prend donc ici la forme d'un trou 37 pratiqué dans la surface 36 issue de moulage avec le canal 13 de circulation de liquide.

L'invention concerne également un ensemble 100 illustré aux figures 1, 2 et 4, comprenant l'embout 11 apte à être installé à une extrémité longitudinale du balai d'essuyage 70 et le dispositif de projection 12. Dans cet ensemble 100, la paroi externe 38 de l'embout 11 est en partie en contact avec la paroi interne 29 du corps 23 du dispositif de projection 12 de façon à assurer le maintien du dispositif de projection 12 sur l'embout 11.

Comme visible sur la figure 1, la forme de l'embout 11 au niveau d'une coupe de l'embout 11 dans un plan transversal à la troisième direction longitudinale 43, effectuée au droit du dispositif de projection 12 est complémentaire de la forme du logement 27 au niveau d'une coupe du logement 27 dans un plan transversal à la troisième direction longitudinale. On comprend ici que le profil de la paroi externe 38 de l'embout 11 est complémentaire selon une coupe effectuée dans un plan perpendiculaire à la troisième direction longitudinale au profil de la paroi interne 29 du corps 23 du dispositif de projection 12. Autrement dit, le logement 27 est de section complémentaire à la section de l'embout 11, dans un plan perpendiculaire à la troisième direction longitudinale 43.

La figure 1 permet également d'illustrer un aspect de l'invention selon lequel le dispositif de projection 12 se situe du côté de la première ouverture 66 de l'embout 11. Autrement dit, le dispositif de projection 12 est situé plus proche du côté de l'embout 11 dirigé vers le centre du balai d'essuyage 70 que de l'extrémité de l'embout 11. La première ouverture 66 de l'embout 11 s'étend ainsi dans le même plan que la première ouverture du logement 27 du dispositif de projection 12.

La figure 4 permet de représenter un autre aspect de l'invention selon lequel l'embout 11 comprend au moins une encoche 47, recevant le moyen de fixation 45 du dispositif 12.

De manière avantageuse au moins une des encoches 47, dite première encoche 47', se situe au niveau du premier flanc 50 et au moins une des encoches, dite deuxième encoche 47", se situe au niveau du deuxième flanc 51. De cette façon, le premier ergot 46' du dispositif de projection 12 s'insère dans la première encoche 47' situé au niveau du premier flanc 50 et le deuxième ergot 46" du dispositif de projection 12 s'insère dans la deuxième encoche 47" situé au niveau du deuxième flanc 51. La complémentarité de forme entre les ergots 46 et les encoches 47 assure ainsi la fixation du dispositif de projection 12 sur l'embout 11.

L'invention concerne également un balai d'essuyage 70 comprenant au moins le support 6, la vertèbre 5, la lame d'essuyage 1, l'embout 11 et le dispositif de projection 12 tels que décris précédemment.

Dans ce balai 70 et comme représenté à la figure 2, le support 6 est décalé par rapport à la vertèbre 5 selon l'axe longitudinal 4. Un tel décalage libère ainsi une zone 42 qui est destinée à recevoir l'embout 11. La présence d'une telle zone 42 rend reconnaissable la combinaison du support 6 avec la vertèbre 5 et la lame d'essuyage 1 pour une utilisation avec l'embout 11. Autrement dit, cette combinaison est reconnaissable dès lors que le support 6 est plus court, selon l'axe longitudinal 4, comparée à la longueur de la vertèbre 5, et éventuellement la longueur de la lame d'essuyage 1.

Selon un exemple de réalisation du balai d'essuyage 70, le support 6 présente une dimension selon l'axe longitudinal 4, c'est-à-dire une longueur, du balai d'essuyage inférieure à une dimension de la vertèbre 5 mesurée selon ce même axe. Une telle disposition permet ainsi de former aisément la zone 42, par exemple en coupant le support 6 à une longueur inférieure à la vertèbre 5.

Il est également possible d'extraire et/ou d'insérer la lame d'essuyage 1 par une translation selon l'axe longitudinal 4 par rapport au support 6. L'embout 11 peut alors présenter des moyens de fixation amovibles sur le balai d'essuyage afin d'autoriser l'extraction ou l'insertion de la lame d'essuyage, et corrélativement la sécurisation de la position de la lame d'essuyage après son remplacement. Dans le cas où la lame d'essuyage est usée, il est alors possible de remplacer uniquement celle-ci et conserver les autres composants tels que le support 6, le déflecteur 10, la vertèbre 5, le dispositif de projection 12 ou l'embout 11, la durée de vie de ces composants étant supérieure à celle de la lame d'essuyage 1.

La figure 2 illustre également un procédé d'assemblage du dispositif de projection 12 sur un balai d'essuyage 70 présentant une zone de réception 42 où,
- on insère le dispositif de projection 12 sur l'embout 11 ;
- on insère l'embout 11 sur le balai d'essuyage en coulissant une vertèbre 5 constitutive du balai dans une première cavité 19 ménagée dans l'embout 11.

De manière alternative, il est possible d'insérer d'abord l'embout 11 sur le balai d'essuyage 70 comme expliqué au paragraphe précédent, puis d'insérer le dispositif de projection 12 sur l'embout 11.

## Revendications

1. Dispositif de projection (12) d'un liquide destiné à être monté à un embout (11) apte à être rapporté sur une extrémité longitudinale d'un balai d'essuyage (70), comprenant un corps (23) et un canal (13) de circulation du liquide réalisés de manière unitaire, ledit canal (13) comprenant un orifice d'entrée (15) et un orifice de projection (16), dans lequel le corps (23) comprend une paroi interne (29) qui délimite un logement (27) destiné à recevoir l'embout (11), ledit dispositif de projection (12) s'étendant selon une première direction longitudinale (41), **caractérisé en ce qu'**il comprend au moins un moyen de fixation (45) apte à bloquer le dispositif de projection (12) par rapport à l'embout (11), selon une direction parallèle à la première direction longitudinale (41).

2. Dispositif (12) selon l'une quelconque des revendications précédentes, dans lequel le logement (27) comprend trois ouvertures qui s'étendent respectivement dans un premier côté (67) bordant le corps (23), dans un deuxième côté (68) bordant le corps (23) et distinct du premier côté (67), et dans un troisième côté (69) reliant le premier côté (67) au deuxième côté (68) de sorte que le logement (27) soit apte à s'insérer sur l'embout (11).

3. Dispositif (12) selon l'une quelconque des revendications précédentes, dans lequel le corps (23) comprend une première portion (91) reliée à une deuxième portion (92) reliée à son tour à une troisième portion (93), lesdites portions dudit corps (23) s'étendant dans des plans différents et étant aptes à épouser le contour d'une paroi externe (38) de l'embout (11).

4. Dispositif (12) selon l'une quelconque des revendications précédentes, dans lequel la paroi interne (29) du corps (23) comprend une première face (71) de forme concave liée à une deuxième face (72) de forme convexe, liée elle-même à une troisième face (73) de forme concave, liée à son tour à une quatrième face (74) de forme convexe, liée enfin à une cinquième face (75) de forme concave, lesdites faces étant aptes à épouser le contour d'une paroi externe (38) de l'embout (11).

5. Dispositif (12) l'une quelconque des revendications précédentes, dans lequel le canal (13) de circulation de liquide s'étend selon une deuxième direction longitudinale (42), la deuxième direction longitudinale (42) étant parallèle à la première direction longitudinale (41).

6. Dispositif (12) l'une quelconque des revendications précédentes, dans lequel le moyen de fixation (45) comprend au moins un ergot (46).

7. Dispositif (12) selon les revendications 4 et 6, dans lequel au moins un des ergots (46), dit premier ergot (46') prend naissance au niveau de la première face (71) concave de la paroi interne (29) du corps (23) et au moins un des ergots (46), dit deuxième ergot (46"), prend naissance au niveau de la cinquième face (75) concave de la paroi interne (29) du corps (23).

8. Dispositif (12) selon l'une quelconque des revendications 6 ou 7, dans lequel le ou les ergots (46) s'étendent vers l'intérieur du logement (27).

9. Dispositif selon l'une quelconque des revendications précédentes, dans lequel le canal (13) de circulation de liquide est relié au corps (23) par au moins un bras (55) qui prend naissance sur une paroi externe (28) du corps (23).

10. Ensemble (100) comprenant un embout (11) apte à être installé à une extrémité longitudinale d'un balai d'essuyage (70) et un dispositif de projection (12) d'un liquide pour un balai d'essuyage selon l'une quelconque des revendications précédentes.

11. Ensemble (100) selon la revendication 10, dans lequel l'embout (11) comprend une paroi externe (38) en partie en contact avec une paroi interne (29) du dispositif de projection (12).

12. Ensemble (100) selon l'une quelconque des revendications 10 ou 11, dans lequel l'embout (11) s'étend selon une troisième direction longitudinale (43) et dans lequel la forme de l'embout (11) au niveau d'une coupe dans un plan transversal à la troisième direction longitudinale (43), effectuée au droit du dispositif de projection (12) est complémentaire à la forme du logement (27) au niveau d'une coupe dans un plan transversal à la troisième direction longitudinale (43).

13. Ensemble (100) selon la revendication 12, dans lequel l'embout (11) comprend une première ouverture (66) s'étendant dans un plan transversal à la troisième direction longitudinale et apte à recevoir le balai d'essuyage (70), le dispositif de projection (12) se situant du côté de ladite première ouverture (66) de l'embout (11).

14. Ensemble (100) selon l'une quelconque des revendications 10 à 13, dans lequel l'embout (11) comprend au moins une encoche (47), recevant un moyen de fixation (45) du dispositif (12).

15. Ensemble (100) selon les revendications 13 et 14, dans lequel l'embout (11) comprend une deuxième ouverture (48) destinée à s'insérer au moins en partie sur le balai d'essuyage (70) et s'étendant dans un plan transversal au plan dans lequel s'étend la première ouverture (66) de l'embout (11), ladite deuxième ouverture (48) étant bordée d'un premier flanc (50) et d'un deuxième flanc (51), au moins une des encoches (47), dite première encoche (47'), se situe au niveau du premier flanc (50) et au moins une des encoches (47), dite deuxième encoche (47"), se situe au niveau du deuxième flanc (51).

16. Ensemble selon l'une quelconque des revendications 10 à 15, dans lequel l'embout (11) comprend une première (19) et une seconde (20) cavités séparées par une paroi intermédiaire (25) et aptes à recevoir respectivement une vertèbre (5) et une lame d'essuyage (1) du balai d'essuyage.

17. Balai d'essuyage (70) comprenant au moins un support (6), une vertèbre (5), une lame d'essuyage (1), un embout (11) monté sur une extrémité longitudinale du balai et un dispositif de projection (12) selon l'une quelconque des revendications 1 à 9, installé sur ledit embout (11).

## Patentansprüche

1. Vorrichtung (12) zum Sprühen einer Flüssigkeit zur Befestigung an einem Endstück (11), das an einem Längsende eines Wischblatts (70) angefügt werden kann, umfassend einen Körper (23) und einen Kanal (13) zur Zirkulation der Flüssigkeit, die einstückig ausgeführt sind, wobei der Kanal (13) eine Einlassöffnung (15) und eine Sprühöffnung (16) umfasst, wobei der Körper (23) eine Innenwand (29) umfasst, die eine Aufnahme (27) begrenzt, welche das Endstück (11) aufnehmen soll, wobei sich die Sprühvorrichtung (12) entlang einer ersten Längsrichtung (41) erstreckt, **dadurch gekennzeichnet, dass** sie Folgendes umfasst:
mindestens ein Befestigungsmittel (45), das die Sprühvorrichtung (12) bezüglich des Endstücks (11) in einer parallel zur ersten Längsrichtung (41) verlaufenden Richtung festlegen kann.

2. Vorrichtung (12) nach einem der vorhergehenden Ansprüche, wobei die Aufnahme (27) drei Durchlässe umfasst, die jeweils in einer ersten Seite (67), die am Körper (23) angrenzt, in einer zweiten Seite (68), die am Körper (23) angrenzt und von der ersten Seite (67) verschieden ist, und in einer dritten Seite (69), die die erste Seite (67) mit der zweiten Seite (68) verbindet, verlaufen, so dass die Aufnahme (27) auf das Endstück (11) aufgesetzt werden kann.

3. Vorrichtung (12) nach einem der vorhergehenden Ansprüche, wobei der Körper (23) einen ersten Teil (91), der mit einem zweiten Teil (92) verbunden ist, welcher wiederum mit einem dritten Teil (93) verbunden ist, umfasst, wobei sich die Teile des Körpers (23) in verschiedenen Ebenen erstrecken und sich an die Kontur einer Außenwand (38) des Endstücks (11) anschmiegen können.

4. Vorrichtung (12) nach einem der vorhergehenden Ansprüche, wobei die Innenwand (29) des Körpers (23) eine erste Fläche (71) mit konkaver Form, die mit einer zweiten Fläche (72) mit konvexer Form verbunden ist, die wiederum mit einer dritten Fläche (73) mit konkaver Form verbunden ist, die wiederum mit einer vierten Fläche (74) mit konvexer Form verbunden ist, die schließlich wiederum mit einer fünften Fläche (75) mit konkaver Form verbunden ist, umfasst, wobei sich die Flächen an die Kontur einer Außenwand (38) des Endstücks (11) anschmiegen können.

5. Vorrichtung (12) nach einem der vorhergehenden Ansprüche, wobei der Kanal (13) zur Zirkulation von Flüssigkeit entlang einer zweiten Längsrichtung (42) verläuft, wobei die zweite Längsrichtung (42) parallel zur ersten Längsrichtung (41) ist.

6. Vorrichtung (12) nach einem der vorhergehenden Ansprüche, wobei das Befestigungsmittel (45) mindestens einen Zapfen (46) umfasst.

7. Vorrichtung (12) nach den Ansprüchen 4 und 6, wobei mindestens einer der Zapfen (46), der erste Zapfen (46'), von der konkaven ersten Fläche (71) der Innenwand (29) des Körpers (23) ausgeht und mindestens einer der Zapfen (46), der zweite Zapfen (46"), von der konkaven fünften Fläche (75) der Innenwand (29) des Körpers (23) ausgeht.

8. Vorrichtung (12) nach Anspruch 6 oder 7, wobei sich der oder die Zapfen (46) zum Inneren der Aufnahme (27) erstrecken.

9. Vorrichtung nach einem der vorhergehenden Ansprüche, wobei der Kanal (13) zur Zirkulation von Flüssigkeit mittels mindestens eines Arms (55), der von einer Außenwand (28) des Körpers (23) ausgeht, mit dem Körper (23) verbunden ist.

10. Anordnung (100), die ein Endstück (11), das an einem Längsende eines Wischblatts (70) installiert werden kann, und eine Vorrichtung (12) zum Sprühen einer Flüssigkeit für ein Wischblatt nach einem der vorhergehenden Ansprüche umfasst.

11. Anordnung (100) nach Anspruch 10, wobei das Endstück (11) eine Außenwand (38) umfasst, die teilweise mit einer Innenwand (29) der Sprühvorrichtung (12) in Kontakt steht.

12. Anordnung (100) nach Anspruch 10 oder 11, wobei sich das Endstück (11) entlang einer dritten Längsrichtung (43) erstreckt und wobei die Form des Endstücks (11) an einem senkrecht zur Sprühvorrichtung (12) durchgeführten Schnitt in einer quer zur dritten Längsrichtung (43) verlaufenden Ebene zu der Form der Aufnahme (27) an einem Schnitt in einer quer zur dritten Längsrichtung (43) verlaufenden Ebene komplementär ist.

13. Anordnung (100) nach Anspruch 12, wobei das Endstück (11) einen ersten Durchlass (66) umfasst, der in einer quer zur dritten Längsrichtung verlaufenden Ebene verläuft und das Wischblatt (70) aufnehmen kann, wobei sich die Sprühvorrichtung (12) auf der Seite des ersten Durchlasses (66) des Endstücks (11) befindet.

14. Anordnung (100) nach einem der Ansprüche 10 bis 13, wobei das Endstück (11) mindestens eine Kerbe (47) umfasst, die ein Mittel (45) zur Befestigung der Vorrichtung (12) aufnimmt.

15. Anordnung (100) nach den Ansprüchen 13 und 14, wobei das Endstück (11) einen zweiten Durchlass (48) umfasst, der zumindest teilweise auf das Wischblatt (70) aufgesetzt werden soll und in einer quer zu der Ebene, in der sich der erste Durchlass (66) des Endstücks (11) erstreckt, verlaufenden Ebene verläuft, wobei der zweite Durchlass (48) von einer ersten Flanke (50) und einer zweiten Flanke (51) begrenzt wird, sich mindestens eine der Kerben (47), als erste Kerbe (47') bezeichnet, an der ersten Flanke (50) befindet, und sich mindestens eine der Kerben (47), als zweite Kerbe (47") bezeichnet, an der zweiten Flanke (51) befindet.

16. Anordnung nach einem der Ansprüche 10 bis 15, wobei das Endstück (11) einen ersten (19) und einen zweiten (20) Hohlraum umfasst, die durch eine Zwischenwand (25) getrennt sind und ein Stützglied (5) bzw. eine Wischleiste (1) des Wischerblatts aufnehmen können.

17. Wischblatt (70), das mindestens einen Träger (6), ein Stützglied (5), eine Wischleiste (1), ein Endstück (11), das an einem Längsende des Wischblatts angebracht ist, und eine Sprühvorrichtung (12) nach einem der Ansprüche 1 bis 9, die an dem Endstück (11) installiert ist, umfasst.

## Claims

1. A device (12) for spraying a liquid, intended to be mounted on an end fitting (11) able to be attached to a longitudinal end of a wiper (70), comprising a body (23) and a circulation channel (13) for the liquid that are produced in one piece, said channel (13) comprising an inlet orifice (15) and a spraying orifice (16), wherein the body (23) comprises an internal wall (29) which delimits a housing (27) intended to receive the end fitting (11), wherein the device (12) for spraying a liquid extends in a first longitudinal direction (41), **characterized in that** it comprises at least one fastening means (45) able to immobilize the spraying device (12) with respect to the end fitting (11) in a direction parallel to the first longitudinal direction (41)..

2. The device (12) as claimed in any one of the preceding claims, wherein the housing (27) comprises three openings which extend respectively through a first side (67) bordering the body (23), through a second side (68) bordering the body (23) and separate from the first side (67) and through a third side (69) connecting the first side (67) to the second side (68) such that the housing (27) is able to be fitted on the end fitting (11).

3. The device (12) as claimed in any one of the preceding claims, wherein the body (23) comprises a first portion (91) connected to a second portion (92) connected in turn to a third portion (93), said portions of said body (23) extending in different planes and being able to match the contour of an external wall (38) of the end fitting (11).

4. The device (12) as claimed in any one of the preceding claims, wherein the internal wall (29) of the body (23) comprises a first face (71) having a concave shape connected to a second face (72) having a convex shape, itself connected to a third face (73) having a concave shape, connected in turn to a fourth face (74) having a convex shape, connected finally to a fifth face (75) having a concave shape, said faces being able to match the contour of an external wall (38) of the end fitting (11).

5. The device (12) as claimed in any one of the preceding claims, wherein the liquid circulation channel (13) extends in a second longitudinal direction (42), the second longitudinal direction (42) being parallel to the first longitudinal direction (41).

6. The device (12) as claimed in any one of the preceding claims, wherein the fastening means (45) comprises at least one lug (46).

7. The device (12) as claimed in claims 4 and 6, wherein at least one of the lugs (46), called the first lug (46'), originates in the region of the concave first face (71) of the internal wall (29) of the body (23) and at least one of the lugs (46), called the second lug (46"), originates in the region of the concave fifth face (75) of the internal wall (29) of the body (23).

8. The device (12) as claimed in either one of claims 6 and 7, wherein the lug or lugs (46) extend(s) toward the interior of the housing (27).

9. The device as claimed in any one of the preceding claims, wherein the liquid circulation channel (13) is connected to the body (23) by at least one arm (55) which originates on an external wall (28) of the body (23).

10. An assembly (100) comprising an end fitting (11) able to be installed at a longitudinal end of a wiper (70) and a device (12) for spraying a liquid for a wiper as claimed in any one of the preceding claims.

11. The assembly (100) as claimed in claim 10, wherein the end fitting (11) comprises an external wall (38) partially in contact with an internal wall (29) of the spraying device (12).

12. The assembly (100) as claimed in either one of claims 10 and 11, wherein the end fitting (11) extends in a third longitudinal direction (43) and wherein the shape of the end fitting (11) in the region of a cross section in a plane transverse to the third longitudinal direction (43), carried out perpendicularly to the spraying device (12), is complementary to the shape of the housing (27) in the region of a cross section in a plane transverse to the third longitudinal direction (43).

13. The assembly (100) as claimed in claim 12, wherein the end fitting (11) comprises a first opening (66) extending in a plane transverse to the third longitudinal direction and able to receive the wiper (70), the spraying device (12) being located on the side of said first opening (66) in the end fitting (11).

14. The assembly (100) as claimed in any one of claims 10 to 13, wherein the end fitting (11) comprises at least one notch (47) receiving a securing means (45) of the device (12).

15. The assembly (100) as claimed in claims 13 and 14, wherein the end fitting (11) comprises a second opening (48) intended to be fitted at least partially on the wiper (70) and extending in a plane transverse to the plane in which the first opening (66) in the end fitting (11) extends, said second opening (48) being bordered by a first flank (50) and a second flank (51), at least one of the notches (47), called the first notch (47'), being located in the region of the first flank (50) and at least one of the notches (47), called the second notch (47"), being located in the region of the second flank (51).

16. The assembly as claimed in any one of claims 10 to 15, wherein the end fitting (11) comprises a first cavity (19) and a second cavity (20) which are separated by an intermediate wall (25) and are able to respectively receive a vertebra (5) and a wiper blade (1) of the wiper.

17. A wiper (70) comprising at least one support (6), a vertebra (5), a wiper blade (1), an end fitting (11) mounted on a longitudinal end of the wiper and a spraying device (12) as claimed in any one of claims 1 to 9, installed on said end fitting (11).
